# EUROPEAN PATENT APPLICATION

(11) **EP 4 548 756 A1**
(43) Date of publication of application: **07.05.2025**
(21) Application number: 24000127.1
(22) Date of filing: 28.10.2024
(51) Int. Cl.: A01K 13/00, A01M 29/24, F41H 9/10, A01M 29/12

(54) **ANTI-AGGRESSION DEVICE FOR DOGS**

(30) Priority: 03.11.2023 IT 202300023154
(71) Applicant: Rossini, Leonardo, 54013 Fivizzano (MS) (IT); Manenti, Nicolo', 54016 Licciana Nardi (MS) (IT)
(72) Inventor: Rossini, Leonardo, 54013 Fivizzano (MS) (IT); Manenti, Nicolo', 54016 Licciana Nardi (MS) (IT)

(57) **Abstract**

The device includes a double-layer (2) dog vest (1) with an inner layer (3) of anti-fang material. The external layer (3) in one version is includes pipes (30) connected to a spray can (32), while in a second version the external layer has internal part (201) covered with electrical insulation and an external part (202) in which an electrified net (203) is placed with wires in conductive material connected to a rechargeable battery (205).

## Description

### Field of invention.

The invention relates to a dog vest capable of deterring other animals, particularly wolves, from attacking.

### State of the art.

Currently there are know vests, jackets or dog clothes made of materials that are resistant to the fangs of a bite, that is, with anti-fang materials such Kevlar^{®}, Dyneema^{®}, Cordura^{®}, Dynefelt^{®} or a combination of these. However said vests only have a defensive function against an animal bite, but do not act as deterrent to an attack. The animal that attacks the dog, often in a pack, continues to attack the dog with bites, especially in areas not covered by protections, with the attack that can last until the dog's death.

### Summary of the invention.

The object of the invention is an anti-aggression device for dogs capable of stopping the attack of one or more animals on the dog, in particular wolves, as it has active defences and not only passive one such as those known consisting of anti-fang vests for the dog's body. The device which is the subject of the results has in fact an active protection against the aggression of other animals, given by stinging substance which are activated by the bite of the aggressor animal, as in the case of wolves, or charge of other animals, as in the case of wild boars. In another embodiment the anti-aggression device capable of generating shocks instead of stinging substances that come out with the bite of the attacking animal. This therefore helps to discourage attacks on the dog by other animals, as they associate this action with something that has caused them pain. This and other purposes and advantages of the present invention will be made more evident by the following detailed description of embodiments with reference to the attached drawings, in which the invention is illustrated for indicative and not-limiting purposes.

### Brief description of the drawings.

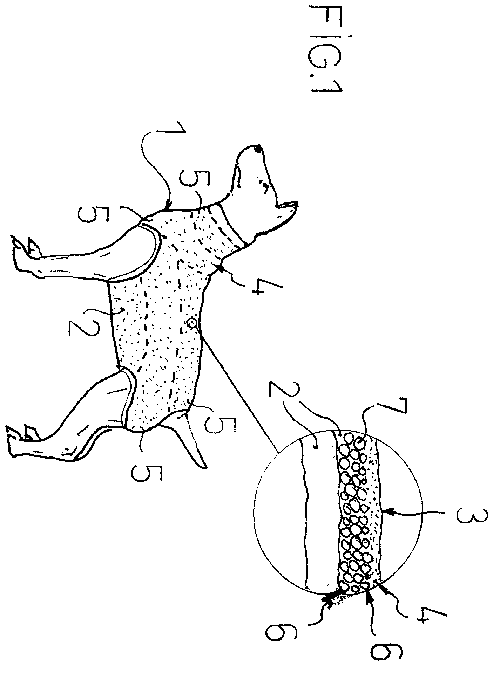

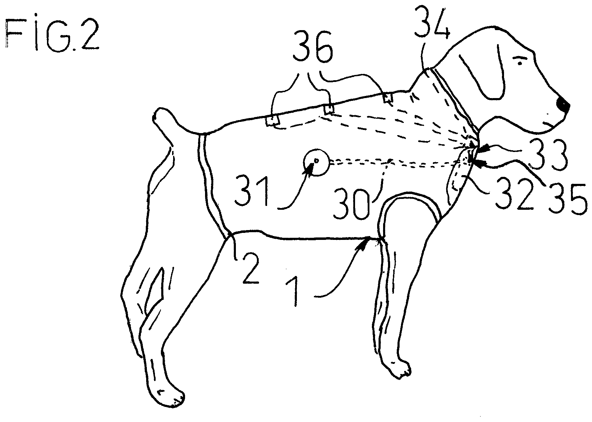

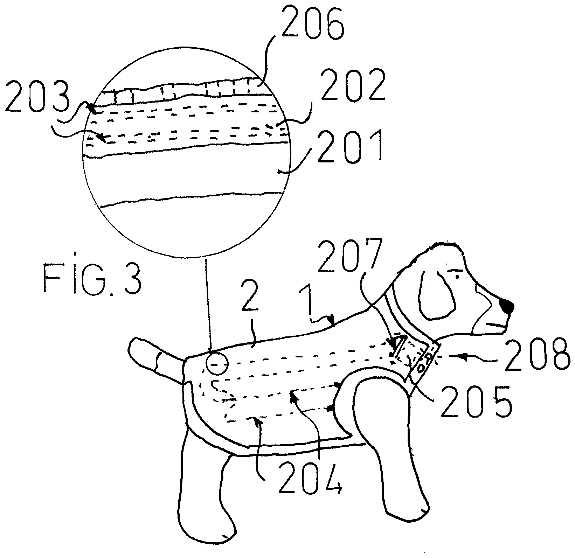

Figure 1 is a side view of a dog with the device in question, i.e. with stinging substances contained in spheres and placed on the external surface of the dog vest. Figure 2 is a view of a dog vest comprising a pepper spray canister with piping and canister activation device connected to pressure sensor. Figure 3, finally, is a view of a dog vest equipped with an electrified net and battery capable of generating shocks to the attacking animal when it bites or charges the dog equipped with the device in question.

### Detailed description.

The anti-aggression device for dogs comprises a double-layer 2 dog vest 1,close-fitting to the dog's body, where the inner layer is made of anti-fang material and the outer layer 3 is equipped with micro-holes 4 on the outside and divided into pockets 5 at the neck, throat, chest, back and abdomen and where, inside these pockets 5, microspheres 6 are placed containing stinging gas 7, such as OC gas (oleoresin capsicum) normally used in pepper spray. During operation, when the attacking animal bites, the microspheres 6 break, releasing the sting gas 7 from the micro-holes 4 which will cause pain from irritation in the mouth, so much so that it will not continue biting. A similar operation occurs in the event of an attack by wild boars or other animals, where the microspheres 6, breaking on impact, temporarily irritate the muzzle and eyes of the attacking animal. The microspheres 6 are interchangeable and replaceable inside the bags 5 with other charges of stinging gas 7, both in the case in which the dog is attacked by another animal or in the case of deterioration of the microspheres 6. In another embodiment the anti-aggression device for dogs comprises a double-layer 2 dog vest 1 which adheres to the dog's body, with an internal layer in anti-fang material and with an external layer 3 equipped internally with pipes 30 with nozzle 31 external to the layer 3, with pipes 30 connected to spray can 32 with irritating gas, placed in a special pocket 33 of the dog vest 1, with electronic device 34 to activate the opening of button 35 of can 32, where the electronic device 34 is connected to pressure sensor 36. During operation, any bite or charge to the dog vest 1 is detected by the pressure sensor 36 of electronic device 34 which activates the opening of the button 35 of the canister, causing the stinging gas to escape from the nozzle 31. In a further embodiment, the anti-aggression device for dogs, equipped with components to deter attacks by other animals, comprises a double-layer 2 dog vest 1 with an internal layer in anti-fang material and with an outer layer with inside part 201 coated with electrical insulation, such as rubber and outer part 202 in which an electrified net 203 is placed with wires made of conductive material, such as copper, connected to a rechargeable battery 205 with a further insulating layer 206 with holes. In the event of a bite from an aggressive animal, the fangs, passing through the holes in the insulating layer 206, close a circuit and the animal get a shock, like electric fences. The device is therefore able to generate electric shocks in the event of contact, i.e. a bite from a wolf or other animal and a charge from a wild boar. The connection and the electrical diagram of the electrified network with the rechargeable battery 205 are within the reach of the average technician in the sector according to electrical diagrams also used also used in electric fences. The rechargeable battery 205 is housed in dedicated sack 207 with charge indicators 208 visible on the outside of the dog vest 1. The device in question can obviously also be used for other animals in addition to dogs, such as sheep or other farm animals to be protected from attacks by predatory animals. The invention is susceptible to numerous modifications and variations, all of which fall within the scope of the inventive concept. All details can be replaced by other technically equivalent ones, without thereby departing from the scope of protection established by the claims.

## Claims

1. Anti-aggression device for dogs including a double layer (2) dog vest (1) with inner layer in anti-fang material **characterized in that** the outer layer (3) includes within it piping (30) connected to spray can (32) with urticant gas housed in dedicated sack (33) of the dog vest (1), with electronic device (34) driving the opening of the button (35) of the can (32) and where the electronic device (34) is connected to pressure sensors (36).

2. Anti-aggression device for dogs including a double layer (2) dog vest (1) with inner layer in anti-fang material **characterized in that** it has an outer layer with inside part (201) coated with electrician insulation and outer part (202) where is housed an electrified net (203) with wires made of conductive material connected to rechargeable battery (205) housed in dedicated sack (206) with charge indicators (207) visible outside the dog vest (1).
